# EUROPÄISCHE PATENTANMELDUNG

(11) **EP 4 036 185 A1**
(43) Veröffentlichungstag der Anmeldung: **03.08.2022**
(21) Anmeldenummer: 22151463.1
(22) Anmeldetag: 13.01.2022
(51) Int. Cl.: C09J 7/40

(54) **LASER-BASIERTE STRUKTURIERUNG VON TRENNMATERIALIEN**

(30) Priorität: 29.01.2021 DE 102021200840
(71) Anmelder: tesa SE, 22848 Norderstedt (DE)
(72) Erfinder: Koops, Arne, 23881 Neu-Lankau (DE); Wieck, Andreas, 25469 Halstenbek (DE)
(74) Vertreter: tesa SE

(57) **Zusammenfassung**

Die Erfindung betrifft ein Verfahren zur Herstellung eines strukturierten Trennmaterials, umfassend die Schritte: a) Herstellen oder Bereitstellen eines mehrschichtigen Ausgangsmaterials umfassend eine zumindest teilweise aus Kunststoff ausgebildete Trägerschicht und eine auf der Trägerschicht angeordnete Silikon-Releaseschicht, und b) abschnittweises Bestrahlen des mehrschichtigen Ausgangsmaterials mit einer von einem Laser erzeugten elektromagnetischen Strahlung einer Wellenlänge λ zur Herstellung des strukturierten Trennmaterials, wobei die Silikon-Releaseschicht für elektromagnetische Strahlung der Wellenlänge λ im Wesentlichen durchlässig ist, wobei die Trägerschicht zumindest ein Additiv umfasst, das elektromagnetische Strahlung der Wellenlänge λ absorbieren und infolge der Absorption zumindest ein gasförmiges Zersetzungsprodukt abspalten kann, und wobei das abschnittweise Bestrahlen so erfolgt, dass die elektromagnetische Strahlung durch die Silikon-Releaseschicht hindurch auf die Trägerschicht auftrifft.

## Beschreibung

Die Erfindung betrifft ein Verfahren zur Herstellung eines strukturierten Trennmaterials sowie ein Verfahren zur Herstellung von abgedeckten Klebebändern, ein entsprechendes strukturiertes Trennmaterial und die Verwendung eines Lasers bei der Herstellung von strukturierten Trennmaterialien. Offenbart wird zudem die Verwendung eines abgedeckten Klebebandes mit einem entsprechenden Trennmaterial zum Fügen von Bauteilen, insbesondere in der Fahrzeugindustrie.

Der Gegenstand der Erfindung ist in den beigefügten Ansprüchen definiert.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar.

Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Darüber hinaus ist ein zweiter Typ von Klebebändern von großer Bedeutung, insbesondere für den Einsatz in der industriellen Fertigungstechnik. In diesen Klebebändern wird statt einer dauerhaft klebrigen Haftklebemasse eine aushärtbare Klebemasse eingesetzt. Entsprechende aushärtbare Klebemassen haben in dem für die Applikation vorgesehenen Zustand noch nicht ihren maximalen Vernetzungsgrad erreicht und können durch äußere Einflüsse ausgehärtet werden, indem die Polymerisation in der aushärtbaren Klebemasse initiiert und dadurch der Vernetzungsgrad erhöht wird. Hierbei verändern sich die mechanischen Eigenschaften der nunmehr ausgehärteten Klebemasse, wobei insbesondere die Viskosität, die Oberflächenhärte und die Festigkeit zunehmen.

Den verschiedenen Arten von Klebebändern ist gemein, dass es bei der Applikation des Klebebandes im Zuge des Fügeprozesses zu ungewollten Lufteinschlüssen kommen kann, insbesondere, wenn entsprechende Fügearbeiten unter Zeitdruck und/oder von unzureichend unterwiesenem Personal ausgeführt werden. Diese Lufteinschlüsse können sich ausbilden, wenn die umgebende Klebemasse vor dem Entweichen der Luft bereits dichtend mit dem Untergrund verbunden ist, sodass die im Einschluss enthaltene Luft auch später nicht mehr entweichen kann. Durch entsprechende Lufteinschlüsse wird der Kontakt zwischen dem Substrat und der aufgebrachten Klebefläche beeinträchtigt und die Kontaktfläche reduziert. Dies wird mit Blick auf die erzielbare Klebwirkung und die Langlebigkeit der Verklebung regelmäßig als nachteilig empfunden.

Zur Umgehung dieses Problems ist es möglich, die Oberfläche der Klebemasse eines Klebebandes zu strukturieren, d.h. mit einem ungleichmäßigen Profil zu versehen, sodass bei der Applikation des Klebebandes ein kontrolliertes Ableiten von Lufteinschlüssen möglich ist, da verbleibende Luftmengen entlang von Vertiefungen in der Oberfläche der Klebmasse entweichen können, bevor das Klebeband seinen finalen Applikationszustand erreicht.

Es ist grundsätzlich möglich, eine entsprechende Oberflächenstrukturierung der Klebemasse durch eine unmittelbare Modifikation der Oberfläche der Klebemasse zu erreichen, beispielsweise mit materialabtragenden Verfahren. In der Praxis wird die hierfür notwendige Oberflächenstruktur der Klebemasse jedoch häufig dadurch erreicht, dass diese durch eine Schicht geprägt wird, die selbst strukturiert ist und als Negativ der auf der Klebeschicht auszubildenden Struktur fungiert.

Diese Prägung der unterliegenden Klebemasse kann beispielsweise direkt durch eine Trennbeschichtung mit einer strukturierten Oberfläche erfolgen, die in vielen Klebebändern ohnehin vorgesehen wird. Solche Trennbeschichtungen, die auch als Trennmaterial oder Releaseliner bezeichnet werden, werden bei den üblicherweise zu archimedischen Spiralen aufgewickelten Klebebändern regelmäßig dafür eingesetzt, um zu verhindern, dass die verschiedenen Lagen der Klebebänder aneinanderhaften, insbesondere bei doppelseitig klebenden Klebebändern, und gewährleisten ein leichtes Abrollen. Diese Releaseliner, die vor der Anwendung des Klebebandes von der Klebmasse entfernt werden, sorgen außerdem dafür, dass die Klebemasse vor der Applikation nicht durch Verunreinigung verschmutzt wird, die die Klebeleistung nachteilig beeinflussen könnten. Zudem ist es über die Einstellung der Materialeigenschaften der Trennmaterialien möglich, dass Abrollverhalten von Klebebandrollen an die für spezifische Anwendungen vorgesehenen Vorgaben anzupassen.

Um ein effizientes Entfernen der Trennmaterialien von den unterliegenden Klebemassen zu gewährleisten, werden als Trennmaterialien häufig solche Materialien eingesetzt, die an ihrer Oberfläche eine Trennbeschichtung aufweisen, wobei als Trennbeschichtung häufig vernetzbare Silikonsysteme eingesetzt werden. Der Fachmann spricht in diesem Zusammenhang auch von einer Silikonisierung der Trennmaterialien bzw. von einer Silikon- Releaseschicht.

Zur Herstellung strukturierter Trennmaterialien sind im Stand der Technik verschiedene Verfahren bekannt, wie sie beispielsweise in der EP 2 851 405 A1 offenbart werden. Die Strukturierung erfolgt dabei beispielsweise an der auf dem Trägermaterial aufgebrachten poly-olefinischen Beschichtung. Als Verfahren kommen beispielsweise die Verwendung von profilierten Extruderwerkzeugen, von mechanischen Prägewerken, insbesondere Rollen, oder auch eine chemische Strukturierung in Frage, mit der in der Trennbeschichtung gezielt Fehlstellen von vernetzter Silikonmasse erzeugt werden. Alternativ kann neben einer prägenden und/oder abtragenden Strukturierung der Trennmaterialien auch eine additive Strukturierung eingesetzt werden, bei der selektiv eine zusätzliche Schicht auf die Trennbeschichtung aufgedruckt wird, um eine Struktur zu schaffen.

Die aus dem Stand der Technik bekannten Verfahren zur Strukturierung von Trennmaterialien mit einer Silikon-Releaseschicht werden aus unterschiedlichen Gründen regelmäßig als nachteilig empfunden. Die Verwendung von strukturierten Extrusionswerkzeugen und/oder die Prägung mittels vorstrukturierten Rollen erfordern den Einsatz von vergleichsweise aufwendigen Werkzeugen, die gewartet, gereinigt und in regelmäßigen Abständen ausgetauscht werden müssen, wodurch die Fertigungskosten steigen. Zudem sind mechanisch prägende Werkzeuge regelmäßig eingeschränkt hinsichtlich der Feinheit der auf die Oberfläche applizierbaren Strukturen, die zudem zumeist nur in einer Art ausgeführt werden können bzw. bei rollenförmigen Strukturierungsvorrichtungen nur periodisch wiederkehrende Strukturen einprägen können.

Die chemische Prägung erfordert im Gegensatz hierzu regelmäßig den Einsatz von Inhibitoren, die auch als Kontakt- oder Katalysatorgifte bezeichnet werden können, und unter Gesichtspunkten der Arbeitsgesundheit und/oder Arbeitssicherheit regelmäßig als nachteilig empfunden werden. Insbesondere erhöht die Notwendigkeit des Einsatzes von spezifischen zusätzlichen Verbindungen und deren ortsaufgelöster Applikation den Herstellungsaufwand entsprechender Trennmaterialien erheblich, wie es auch für das additive Aufbringen von zusätzlichen lokalen Schichten zur Strukturierung festzustellen ist.

Den meisten Strukturierungsverfahren ist zudem gemein, dass mit diesen eine Trennbeschichtung, d.h. eine Silikon-Releaseschicht, erhalten wird, die eine ungleichmäßige Schichtdicke aufweist und deren physikalisch-chemischen Eigenschaften, insbesondere deren Haftverhalten auf einer Klebemasse, ungleichmäßig ist, wobei beispielsweise sogar teilweise das unter der Silikon-Releaseschicht liegende Trägermaterial freigelegt und dadurch in den Kontakt mit der bedeckten Klebemasse kommen kann. Dieser Umstand wird häufig als nachteilig empfunden und hat zur Folge, dass in herkömmlichen Strukturierungsverfahren zur Vermeidung der Nachteile zumeist zusätzlicher Aufwand betrieben werden muss, um ein strukturiertes Trennmaterial mit einer Silikon-Releaseschicht mit durchgehend akzeptablen Trenneigenschaften zu erhalten.

Es war eine Aufgabe der vorliegenden Erfindung, die vorstehend beschriebenen Nachteile des Standes der Technik zu beheben oder zumindest abzuschwächen. Insbesondere war es die Aufgabe der vorliegenden Erfindung, ein Verfahren für die Herstellung eines strukturierten Trennmaterials anzugeben, bei dem ein strukturiertes Trennmaterial erhalten wird, dessen Silikon-Releaseschicht eine besonders hohe Qualität hat und insbesondere möglichst gleichbleibende Haftungseigenschaften aufweist. Hierbei war es eine Zielsetzung, ein Verfahren zur Herstellung eines strukturierten Trennmaterials anzugeben, bei dem ein strukturiertes Trennmaterial erhalten wird, welches eine möglichst gleichmäßig dicke Silikon-Releaseschicht aufweist, welche die unterliegende Trägerschicht möglichst gleichmäßig bedeckt.

Darüber hinaus war es eine Aufgabe der vorliegenden Erfindung, ein Verfahren zur Herstellung eines strukturierten Trennmaterials anzugeben, welches nicht als materialabtragendes Verfahren ausgestaltet ist und somit im Betrieb möglichst wenig Abfall produziert. Darüber hinaus war es eine Maßgabe, dass das anzugebende Verfahren zur Herstellung von strukturierten Trennmaterialien möglichst ohne den Einsatz von gesundheitsschädlichen Substanzen auskommen sollte, insbesondere ohne den Einsatz von Inhibitoren und Katalysatorgiften.

Es war eine Aufgabe der vorliegenden Erfindung ein Verfahren zur Herstellung strukturierter Trennmaterialien anzugeben, welches besonders leistungsstark ist und mit dem in einem kontinuierlichen Verfahren ein hoher Durchsatz an Trennmaterial erreicht werden kann, wobei es wünschenswert war, dass das mit dem erfindungsgemäßen Verfahren erzeugte Trennmaterial unmittelbar nach Durchlaufen des Verfahrens auf ein Klebeband appliziert werden kann, d.h. ohne weitere Bearbeitungsschritte wie bspw. zusätzliche Trocknungsschritte.

Eine ergänzende Aufgabe der vorliegenden Erfindung ist darin zu sehen, dass das anzugebende Verfahren zur Herstellung eines strukturierten Trennmaterials in der Lage sein sollte, auf der Oberfläche des Trennmaterials flexibel verschiedene Strukturen erzeugen zu können und die auf das Trennmaterial übertragene Struktur im Betrieb leicht veränderbar sein sollten. Hierbei war es eine Maßgabe, dass das Verfahren nicht dahingehend limitiert sein sollte, dass zwangsläufig periodisch wiederkehrende Strukturelemente auf die Oberfläche aufgebracht werden müssen.

Es war eine ergänzende Aufgabe der vorliegenden Erfindung, dass das Verfahren zur Herstellung eines strukturierten Trennmaterials möglichst weitgehend unter Einsatz solcher Materialien betrieben werden sollte, die im Bereich der Klebebandtechnologie bereits verbreitet sind und insbesondere ohne eine chemische Modifizierung der Silikon-Releaseschicht auskommen sollte, um deren Eigenschaften nicht nachteilig zu beeinflussen.

Es war eine ergänzende Aufgabe der vorliegenden Erfindung, das Verfahren zur Herstellung eines strukturierten Trennmaterials so auszugestalten, dass beidseitig mit einem Silikon-Releaseschicht ausgestattete Trennmaterialien idealerweise auch gleichzeitig beidseitig strukturiert werden können. Zudem sollte die Silikon-Releaseschicht auch im Zuge des erfindungsgemäßen Verfahrens vorteilhafterweise im Wesentlichen nicht chemisch verändert werden.

Anknüpfend an diese Aufgaben war es zudem ein Ziel der vorliegenden Erfindung, ein Verfahren zur Herstellung von abgedeckten Klebebändern anzugeben. Darüber hinaus war es eine Aufgabe der vorliegenden Erfindung ein strukturiertes Trennmaterial zur Abdeckung von Klebemassen von Klebebändern anzugeben. Des Weiteren war es eine Aufgabe der Erfindung, eine Verwendung für mit entsprechenden Verfahren hergestellte, abgedeckte Klebebänder anzugeben. Abschließend war es eine Aufgabe der vorliegenden Erfindung, eine Verwendung für einen Laser bei der Herstellung von strukturierten Trennmaterialien mit einer gleichmäßig dicken Silikon-Releaseschicht anzugeben.

Die Erfinder der vorliegenden Erfindung haben nun erkannt, dass sich die vorstehend beschriebenen Aufgaben überraschenderweise lösen lassen, wenn die Strukturierung der Silikon-Releaseschicht indirekt erfolgt, nämlich durch eine Modifikation der unterliegenden Trägerschicht.

Hierfür wird ausgenutzt, dass typische Silikon-Releaseschichten zumindest für elektromagnetische Strahlung bestimmter Wellenlänge, wie sie von in der Industrie üblichen Lasern erzeugt werden kann, zumindest insoweit transluzent, d.h. durchlässig, ist, dass elektromagnetische Strahlung eines geeigneten Lasers durch die Silikon-Releaseschicht durchdringen kann, ohne mit dieser eine Wechselwirkung einzugehen, die die physikalisch-chemische Struktur der Silikon-Releaseschicht nachteilig verändern würde. Dadurch ist es möglich, die von einem Laser erzeugte elektromagnetische Strahlung durch die Silikon-Releaseschicht hindurch auf die darunterliegende Trägerschicht zu applizieren.

Die Erfinder haben erkannt, dass in der Trägerschicht Additive vorgesehen werden können, die -anders als die Silikon-Releaseschicht- die elektromagnetische Strahlung der eingestrahlten Wellenlänge absorbieren können und infolge der Absorption, beispielsweise infolge von einer durch die Absorption verursachten lokalen Erwärmung, zumindest ein gasförmiges Zersetzungsprodukt abspalten. Durch die Abspaltung der gasförmigen Zersetzungsprodukte kommt es an der vom Laser bestrahlten Stelle der Trägerschicht zu einer lokalen Volumenexpansion, durch die zunächst die Oberfläche der Trägerschicht strukturiert wird.

Durch die Verformbarkeit der aufliegenden Silikon-Releaseschicht folgt die Trennbeschichtung dieser entstehenden Strukturierung der Trägerschicht, sodass auch auf der Oberfläche der Silikon-Releaseschicht und damit des gesamten Trennmaterials die gewünschte Erhebung erzeugt wird. Da es nicht zu einem Materialabtrag kommt, ist es möglich, dass die Dicke der Silikon-Releaseschicht besonders wenig verändert und der Grad der Bedeckung der unterliegenden Trägerschicht nahezu nicht reduziert wird.

Durch dieses Verfahren ist es nunmehr überraschenderweise möglich, durch gezielte Manipulation der unterliegenden Trägerschicht das gewünschte Strukturmuster auf der Oberfläche der aufliegenden Silikon-Releaseschicht zu erzeugen, ohne auf herkömmliche Verfahren zur Strukturierung der Oberfläche von Silikon-Releaseschichten zurückgreifen zu müssen.

Die vorstehend genannten Aufgaben werden somit durch ein Verfahren zur Herstellung eines strukturierten Trennmaterials, Verfahren zur Herstellung von abgedeckten Klebebändern, strukturierte Trennmaterialien und Verwendungen gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Gegenstände, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Gegenstände. Merkmale bevorzugter erfindungsgemäßer strukturierter Trennmaterialien und deren Verwendung ergeben sich aus den Merkmalen bevorzugter erfindungsgemäßer Verfahren.

Die Erfindung betrifft ein Verfahren zur Herstellung eines strukturierten Trennmaterials, umfassend die Schritte:
a) Herstellen oder Bereitstellen eines mehrschichtigen Ausgangsmaterials umfassend eine zumindest teilweise aus Kunststoff ausgebildete Trägerschicht und eine auf der Trägerschicht angeordnete Silikon-Releaseschicht, und
b) Abschnittweises Bestrahlen des mehrschichtigen Ausgangsmaterials mit einer von einem Laser erzeugten elektromagnetischen Strahlung einer Wellenlänge λ zur Herstellung des strukturierten Trennmaterials,

wobei die Silikon-Releaseschicht für elektromagnetische Strahlung der Wellenlänge λ im Wesentlichen durchlässig ist,
wobei die Trägerschicht zumindest ein Additiv umfasst, das elektromagnetische Strahlung der Wellenlänge λ absorbieren und infolge der Absorption zumindest ein gasförmiges Zersetzungsprodukt abspalten kann, und
wobei das abschnittweise Bestrahlen so erfolgt, dass die elektromagnetische Strahlung durch die Silikon-Releaseschicht hindurch auf die Trägerschicht auftrifft.

Das mehrschichtige Ausgangsmaterial umfasst zumindest zwei Schichten, wobei die Trägerschicht zumindest teilweise aus Kunststoff ausgebildet ist und wobei die Oberfläche der Trägerschicht, die mit der Silikon-Releaseschicht in Kontakt steht, vorzugsweise bezogen auf die Masse zu mehr als 60 %, bevorzugt zu mehr als 80 %, besonders bevorzugt im Wesentlichen vollständig aus Kunststoff ausgebildet ist. Auf der Trägerschicht ist also erfindungsgemäß eine Silikon-Releaseschicht angeordnet, welche auf der Trägerschicht mit herkömmlichen Verfahren aufgebracht werden kann.

In dem erfindungsgemäßen Verfahren kann das einzusetzende mehrschichtige Ausgangsmaterial entweder unmittelbar hergestellt werden, beispielsweise durch Beschichtung einer Trägerschicht mit einer Silikon-Releaseschicht, oder lediglich bereitgestellt werden, beispielsweise, indem es von einem externen Lieferanten zugekauft wird. Bevorzugt ist ein erfindungsgemäßes Verfahren, wobei das mehrschichtige Ausgangsmaterial durch Beschichtung der Trägerschicht mit der Silikon-Releaseschicht hergestellt wird.

Die Trägerschicht bzw. die aus Kunststoff ausgebildeten Teile der Trägerschicht umfassen das Additiv, dessen Zersetzung in zumindest teilweise gasförmige Zersetzungsprodukte die lokale Volumenexpansion verursacht, die indirekt zu der Strukturierung der Oberfläche des strukturierten Trennmaterials führt.

Der Fachmann erkennt, dass das erfindungsgemäße Verfahren grundsätzlich bei verschiedenen Wellenlängen durchgeführt werden kann und dass die Wahl des Lasers und der damit verbundenen Wellenlänge λ der elektromagnetischen Strahlung auf die Silikon-Releaseschicht und deren Absorptionsverhalten, sowie das Additiv abgestimmt werden müssen. Die Auswahl eines geeigneten Systems aus Einzelkomponenten ist im Lichte der vorstehenden Offenbarung für den Fachmann möglich, wobei der Fachmann im Wesentlichen auf tabellierte Werte bzw. auf bekannte Herstellerangaben zurückgreifen kann.

Bevorzugt ist jedoch ein erfindungsgemäßes Verfahren, wobei die Wellenlänge λ der elektromagnetischen Strahlung im Bereich von 400 bis 1200 nm, bevorzugt im Bereich von 500 bis 1100 nm, liegt, wobei der Laser vorzugsweise ausgewählt ist aus der Gruppe bestehend aus Nd:YAG Laser, Thulium Laser, Argon-Ionen-Laser und CO₂ Laser, wobei die elektromagnetische Strahlung besonders bevorzugt eine Wellenlänge von 1064 nm aufweist und der Laser ein Nd:YAG Laser ist.

Bevorzugt sind dabei erfindungsgemäße Verfahren, wobei die elektromagnetische Strahlung mit einem frequenzmodulierten Laser erzeugt wird, wobei die Leistung des Lasers vorzugsweise im Bereich von 2 bis 250 W, bevorzugt 5 bis 100 W, liegt.

Als besonders vorteilhaft hat es sich bei dem erfindungsgemäßen Verfahren erwiesen, dass gebräuchliche Silikon-Releaseschichten, wie sie im Stand der Technik bereits vielfach im Einsatz sind, zumeist eine ausreichende Durchlässigkeit für elektromagnetische Strahlung aufweisen, wie sie von industriell gebräuchlichen Lasern erzeugt wird, zumindest im Bereich des sichtbaren Lichts und der unmittelbar angrenzenden Spektralbereiche. In den meisten Fällen wird der Fachmann somit lediglich die Additive und Zusatzstoffe, die ggf. in der Silikon-Releaseschicht vorgesehen sind, danach auswählen müssen, dass diese nicht bei der entsprechenden Wellenlänge λ eine übermäßig hohe Absorption zeigen.

Im Rahmen der vorliegenden Erfindung bedeutet der Ausdruck "für elektromagnetische Strahlung der Wellenlänge λ im Wesentlichen durchlässig", in Übereinstimmung mit dem fachmännischen Verständnis, dass die Silikon-Releaseschicht bei der gewählten Dicke der Schicht so wenig Wechselwirkung mit der elektromagnetischen Strahlung der Wellenlänge λ zeigt, dass eine Bearbeitung des mehrschichtigen Ausgangsmaterials im Umfang der benötigten Strukturierung möglich ist. Dies bedeutet, dass es nicht nötig ist, dass die Silikon-Releaseschicht überhaupt keine Absorption bei der Wellenlänge λ zeigt, da insbesondere in Abhängigkeit von der Schichtdicke, auch eine geringfügige Absorption toleriert werden kann, wenn die dabei entstehenden Veränderungen in der Silikon-Releaseschicht und die erreichbare Modifikation der Trägerschicht für die Bedürfnisse des Fachmannes noch ausreichend sind. Ob dies der Fall ist, lässt sich für den Fachmann anhand von Routineexperimenten bestimmen, wobei er bei unzureichenden Ergebnissen beispielsweise die Schichtdicke oder die Zusammensetzung der Silikon-Releaseschicht ändern kann, oder alternativ einen anderen Laser verwenden kann.

Das Merkmal, dass "die Silikon-Releaseschicht für elektromagnetische Strahlung der Wellenlänge λ im Wesentlichen durchlässig ist", lässt sich demnach alternativ definieren als ein Verfahren, wobei die Silikon-Releaseschicht mehr als 90 %, bevorzugt mehr als 95 %, besonders bevorzugt mehr als 99 %, ganz besonders bevorzugt mehr als 99,5 % der durch die Silikon-Releaseschicht auf die Trägerschicht auftretenden elektromagnetische Strahlung der Wellenlänge λ durchlässt, oder wobei die Intensität der auf die Trägerschicht auftretenden elektromagnetische Strahlung der Wellenlänge λ durch die Silikon-Releaseschicht um 10 % oder weniger, bevorzugt 5 % oder weniger, besonders bevorzugt 1 % oder weniger, ganz besonders bevorzugt 0,5 % oder weniger, reduziert wird, oder wobei die Silikon-Releaseschicht für elektromagnetische Strahlung der Wellenlänge λ einen Absorptionskoeffizienten von 0,2 1/cm oder weniger, bevorzugt 0,1 1/cm oder weniger, besonders bevorzugt 0,05 1/cm oder weniger, ganz besonders bevorzugt 0,01 1/cm aufweist..

Für einen vorgegebenen Laser und eine damit verbundene Wellenlänge der elektromagnetischen Strahlung λ kann der Fachmann ein geeignetes Additiv auf Grundlage von tabellierten, zumeist von Herstellern bereitgestellten Angaben, beispielsweise zum Absorptionsverhalten und zum Zersetzungsverhalten, auswählen und dieses in der Trägerschicht des mehrschichtigen Ausgangsmaterials anordnen.

Im erfindungsgemäßen Verfahren erfolgt das Bestrahlen abschnittsweise. Dies ist nicht dahingehend auszulegen, dass das Verfahren nur intermittierend, d.h. semikontinuierlich, auszuführen wäre, sondern bedeutet, dass zum Erzeugen einer strukturierten Oberfläche nicht sämtliche Bereiche des mehrschichtigen Trägermaterials bestrahlt werden, um durch die ungleichmäßige Volumenexpansion der Trägerschicht ein Profil erzeugen zu können.

Bevorzugt ist ein erfindungsgemäßes Verfahren, wobei das abschnittweise Bestrahlen mit einer Ablenkgeschwindigkeit des Lasers im Bereich von 300 bis 12000 mm/s, bevorzugt 5000 bis 10000 mm/s, durchgeführt wird.

Erfindungsgemäß erfolgt das Bestrahlen so, dass die elektromagnetische Strahlung durch die Silikon-Releaseschicht hindurch auf die Trägerschicht auftritt. Hierdurch wird erreicht, dass der Laser grenzflächennah, d.h. an der Grenzfläche zwischen der Silikon-Releaseschicht und der Trägerschicht, zu der Volumenänderung in der Trägerschicht führt und die so erzeugte Struktur damit an die Silikon-Releaseschicht weitergegeben werden kann. Angesichts der üblichen Eindringtiefe typischer Laser und der üblichen Dicke entsprechender Trägermaterialien wäre eine Bestrahlung von der der Silikon-Releaseschicht abgewandten Seite ineffizient. Zudem wäre es ohnehin nicht vorteilhaft, durch Volumenexpansion eine Struktur in der gesamten Trägerschicht zu erzeugen, von der nur ein Teil auf die Silikon-Releaseschicht übertragen würde und die zum Rest nur in einer Deformation der Trägerschicht resultieren würde.

Auch wenn eine andere Verfahrensführung grundsätzlich möglich erscheint, sind erfindungsgemäße Verfahren explizit bevorzugt, wobei durch das abschnittweise Bestrahlen kein Material, insbesondere kein Material der Silikon-Releaseschicht, vom mehrschichtigen Ausgangsmaterial abgetragen wird.

Das erfindungsgemäße Verfahren lässt sich durch funktionelle Merkmale ergänzend beschreiben. Die Erfindung betrifft aus Sicht des Fachmannes ein erfindungsgemäßes Verfahren, wobei das abschnittweise Bestrahlen so erfolgt, dass das Additiv in der Trägerschicht an den bestrahlten Abschnitten die elektromagnetische Strahlung absorbiert und ein gasförmiges Zersetzungsprodukt abspaltet, so dass die Trägerschicht an den bestrahlten Abschnitten eine lokale Volumenexpansion erfährt. Die Erfindung betrifft zudem ein erfindungsgemäßes Verfahren, wobei das mehrschichtige Ausgangsmaterial so ausgebildet ist, dass die lokale Volumenexpansion der Trägerschicht die Form der auf der Trägerschicht angeordneten Silikon-Releaseschicht verändert, so dass die von der Trägerschicht abgewandte Oberfläche der Silikon-Releaseschicht in den bestrahlten Abschnitten strukturiert wird. Die Erfindung betrifft auch ein erfindungsgemäßes Verfahren, wobei das mehrschichtige Ausgangsmaterial so ausgebildet ist, dass die lokale Volumenexpansion der Trägerschicht die Dicke der Silikon-Releaseschicht um weniger als 50 %, bevorzugt weniger als 30 %, besonders bevorzugt weniger als 10 %, ganz besonders bevorzugt im Wesentlichen nicht verändert. Die Erfindung betrifft des Weiteren ein erfindungsgemäßes Verfahren, wobei das abschnittweise Bestrahlen so erfolgt, dass die chemische Struktur der Silikon-Releaseschicht durch die elektromagnetische Strahlung der Wellenlänge λ nicht verändert wird.

Ein besonderer Vorteil des erfindungsgemäßen Verfahrens ist darin zu sehen, dass es besonders einfach kontinuierlich geführt werden kann, insbesondere in einem sogenannten Rolle-zu-Rolle-Verfahren, bei welchem ein bahnförmiges mehrschichtiges Ausgangsmaterial auf einer Rolle bereitgestellt und abgerollt wird, um nach Durchlaufen des erfindungsgemäßen Verfahrens erneut auf eine zweite Rolle, ggf. direkt eines abgedeckten Klebebandes, aufgewickelt zu werden. Hierdurch ist es möglich, effizient große Mengen an strukturiertem Trennmaterial bzw. abgedecktem Klebeband bereitzustellen. Bevorzugt ist somit ein erfindungsgemäßes Verfahren, wobei das mehrschichtige Ausgangsmaterial bahnförmig bzw. bandförmig ist und/oder wobei das Verfahren als kontinuierliches oder halbkontinuierliches Verfahren, bevorzugt als kontinuierliches Verfahren, insbesondere als Rolle-zu-Rolle-Verfahren geführt wird.

Für bestimmte Anwendungen kann es zielführend sein, im mehrschichtigen Ausgangsmaterial weitere Schichten anzuordnen, beispielsweise um die Anwendungseigenschaften des erhaltenen Trennmaterials zu optimieren. Wichtig ist hierbei jedoch, dass etwaige zwischen der Silikon-Releaseschicht und der durch den Laser zu modifizierenden Trägerschicht angeordneten zusätzlichen Schichten für elektromagnetische Strahlung der Wellenlänge λ ebenfalls im Wesentlichen durchlässig sind. Bevorzugt ist entsprechend ein erfindungsgemäßes Verfahren, wobei das mehrschichtige Ausgangsmaterial weitere Schichten umfasst, wobei sämtliche zwischen der Trägerschicht und der Silikon-Releaseschicht angeordneten Schichten aus Kunststoff ausgebildet und für elektromagnetische Strahlung der Wellenlänge λ im Wesentlichen durchlässig sind.

Als besonderer Vorteil des erfindungsgemäßen Verfahrens kann es angesehen werden, dass es möglich ist, zwei auf unterschiedlichen Seiten der Trägerschicht angeordnete Silikon-Releaseschichten gleichzeitig zu strukturieren, indem das erfindungsgemäße Verfahren beispielsweise mit zwei Lasern durchgeführt wird, die beide Seiten des mehrschichtigen Ausgangsmaterials gleichzeitig bearbeiten. Dies ist mit vielen Verfahren des Standes der Technik nicht effizient möglich, sodass mit dem erfindungsgemäßen Verfahren ein erheblicher Zugewinn an Geschwindigkeit erreicht wird, wodurch die Herstellungskosten reduziert werden können. Bevorzugt ist demnach zunächst ein erfindungsgemäßes Verfahren, wobei das mehrschichtige Ausgangsmaterial zwei Silikon-Releaseschichten umfasst, die auf unterschiedlichen Seiten der Trägerschicht angeordnet sind. Bevorzugt ist in diesem Fall auch ein erfindungsgemäßes Verfahren, wobei das mehrschichtige Ausgangsmaterial gleichzeitig von beiden Seiten strukturiert wird, wobei vorzugsweise zumindest zwei Laser eingesetzt werden.

Grundsätzlich ist das erfindungsgemäße Verfahren nicht hinsichtlich der Kunststoffe begrenzt, die in der Trägerschicht eingesetzt werden können, da im Wesentlichen alle üblichen Polymere dazu geeignet sind, um die in diesem Verfahren einzusetzenden Additive darin zu dispergieren und dazu eingerichtet sind, infolge der Freisetzung der gasförmigen Zersetzungsprodukte durch das Additiv zu expandieren. In eigenen Versuchen der Erfinder haben sich jedoch ausgewählte Polymere als besonders geeignet erwiesen. Als besonderer Vorteil des erfindungsgemäßen Verfahrens kann es zudem angesehen werden, dass dieses nicht darauf limitiert ist, dass die komplette Trägerschicht aus Kunststoff ausgebildet ist. So ist es auch möglich, beispielsweise mit Polymeren beschichtetes Papier oder beschichtete Metallfolien einzusetzen. Bevorzugt ist hiernach ein erfindungsgemäßes Verfahren, wobei die Trägerschicht ein oder mehrere Polymere umfasst, die ausgewählt sind aus der Gruppe bestehend aus Polyethylenvinylalkohol, Polyethylennaphthalat, Polyethylen, Polypropylen, Cycloolefin-Copolymeren und Polyvinylidenchlorid, wobei die Trägerschicht bevorzugt ein mit Polymeren beschichtetes Papier oder eine mit Polymeren beschichtete Metallfolie ist. Bevorzugt ist auch ein erfindungsgemäßes Verfahren, wobei die Trägerschicht zwei oder mehr Schichten umfasst, die aus unterschiedlichen Polymeren bestehen, wobei vorzugsweise sämtliche Schichten das Additiv umfassen.

Anders als bei der Silikon-Releaseschicht ist es nicht notwendig, dass die Trägerschicht für elektromagnetische Strahlung der Wellenlänge λ im Wesentlichen durchlässig ist. Grundsätzlich kann die Zersetzung des Additivs nämlich auch indirekt durch eine Absorption der Strahlung in der Trägerschicht erfolgen, bspw. durch lokale Erwärmung der Trägerschicht. Mit Blick auf die Effizienz des erfindungsgemäßen Verfahrens ist es jedoch bevorzugt, wenn der Kunststoff der Trägerschicht, in dem das Additiv angeordnet ist, die elektromagnetische Strahlung nicht vollständig absorbiert. Insoweit ist ein erfindungsgemäßes Verfahren bevorzugt, wobei der Kunststoff der Trägerschicht für elektromagnetische Strahlung der Wellenlänge λ einen Absorptionskoeffizienten von 0,5 1/cm oder weniger, bevorzugt 0,3 1/cm oder weniger, besonders bevorzugt 0,1 1/cm oder weniger, aufweist.

Grundsätzlich ist das erfindungsgemäße Verfahren hinsichtlich der Dicke der Trägerschicht im Wesentlichen nicht begrenzt, da die Oberflächenstrukturierung grenzflächennah zu der Silikon-Releaseschicht erfolgt. Trotzdem hat es sich in eigenen Versuchen als besonders vorteilhaft erwiesen, die Trägerschicht nicht zu dick auszubilden, auch und gerade um die spätere Anwendbarkeit in Klebebandrollen zu gewährleisten. Bevorzugt ist somit ein erfindungsgemäßes Verfahren, wobei die Trägerschicht eine Dicke im Bereich von 10 bis 300 µm, bevorzugt 30 bis 200 µm, besonders bevorzugt 70 bis 150 µm aufweist.

In eigenen Versuchen hat sich gezeigt, dass das erfindungsgemäße Verfahren im Wesentlichen für alle typischen Silikon-Releaseschichten anwendbar ist. Als besonders vorteilhaft hat es sich jedoch erwiesen, indem letztendlich auf der Wechselwirkung mit elektromagnetischer Strahlung basierenden erfindungsgemäßen Verfahren ein thermisch härtendes vernetzbares Silikonsystem einzusetzen. Für diese kann eine ungewollte Wechselwirkung mit der elektromagnetischen Strahlung der Wellenlänge λ zumeist besonders effizient ausgeschlossen werden, wobei zudem davon ausgegangen werden kann, dass etwaige lokale Temperaturerhöhungen, die an der Grenzfläche der Trägerschicht infolge der Bestrahlung auftreten können, die chemische Struktur des thermisch härtbaren vernetzbaren Silikonsystems nicht nachteilig verändern. Bevorzugt ist demnach ein erfindungsgemäßes Verfahren, wobei die Silikon-Releaseschicht herstellbar ist durch Vernetzung eines vernetzbaren Silikonsystems, wobei das vernetzbaren Silikonsystem ein oder mehrere Polysiloxane umfasst, wobei das vernetzbare Silikonsystem vorzugsweise thermisch härtbar ist, insbesondere kondensations- oder additionsvernetzend härtbar, wobei das vernetzbare Silikonsystem bevorzugt einen Vernetzungskatalysator umfasst, wobei das vernetzbare Silikonsystem bevorzugt aus Lösung oder aus Emulsion oder als lösungsmittelfreies Silikonsystem, bevorzugt als lösungsmittelfreies Silikonsystem, aufgetragen wird. Die vorstehend bezeichneten Vernetzungskatalysatoren umfassen zum Beispiel Ruthenium, Rhodium, Palladium, Osmium, Indium oder insbesondere Platin, deren Komplexe und Verbindungen und/oder Katalysatorsysteme aus mehreren dieser Katalysatoren.

Alternativ ist ein vernetzbares Silikonsystem bevorzugt, welches durch Strahlung, insbesondere UV-Strahlung, aushärtbar ist, wobei das vernetzbare Silikonsystem vorzugsweise ausgewählt ist aus der Gruppe bestehend aus durch UV-Strahlung bei Raumtemperatur vernetzbaren radikalischen und kathionischen Silikonsystemen.

Da typische Silikon-Releaseschichten für die gängigen industriell eingesetzten Laser zumeist eine ausreichend kleine Wechselwirkung mit der von diesen erzeugten Strahlung aufweisen, ist die Dicke der Silikon-Releaseschicht in dem erfindungsgemäßen Verfahren an sich nicht limitiert. Jedoch haben die Erfinder gefunden, dass die Effektivität der Strukturierung der Oberfläche der Silikon-Releaseschicht bei besonders dicken Silikon-Releaseschichten abnehmen kann, da diese lediglich indirekt durch die Strukturierung der unterliegenden Trägerschicht erfolgt. Bevorzugt ist somit ein erfindungsgemäßes Verfahren, wobei die Silikon-Releaseschicht die Trägerschicht im Wesentlichen vollständig bedeckt, wobei die Silikon-Releaseschicht vorzugsweise mit einem getrockneten Auftragsgewicht von 0,1 bis 5 g/m², besonders bevorzugt 0,2 bis 2,5 g/m², ganz besonders bevorzugt 0,4 bis 2 g/m² aufgebracht ist, vorzugsweise in einer Dicke im Bereich von 0,2 bis 4 µm, besonders bevorzugt im Bereich von 0,3 bis 3 µm.

Für bestimmte Anwendungen kann es vorteilhaft sein, das absorbierende Additiv in der Trägerschicht ungleichmäßig zu verteilen. So wäre es beispielsweise möglich, durch lokale Konzentrationsgradienten des Additivs in der Trägerschicht dafür zu sorgen, dass auch bei einer eher flächigen, d.h. gleichmäßigeren Bestrahlung der Trägerschicht eine bestimmte Struktur entsteht, da in diesem Fall der Konzentrationsgradient zu einer unterschiedlich starken Volumenexpansion führen würde. Ein entsprechendes Verfahren wäre jedoch vor allem dann interessant, wenn die Möglichkeiten zur selektiven Ansteuerung des Lasers begrenzt, die Möglichkeiten zur Herstellung von feinen Konzentrationsgradienten in der Trägerschicht jedoch sehr ausgeprägt sind. Für das Gros der Anwendung ist es hingegen vorteilhaft, auf eine abschnittsweise Steuerung des Lasers bei homogen verteilten Additiven zu setzen. Für die meisten Anwendungen ist folglich ein erfindungsgemäßes Verfahren bevorzugt, wobei das Additiv im Wesentlichen homogen in der Trägerschicht verteilt vorliegt.

Die in dem erfindungsgemäßen Verfahren einzusetzenden Additive werden vom Fachmann so ausgewählt, dass sie elektromagnetische Strahlung der Wellenlänge λ, d.h. der Wellenlänge, die vom eingesetzten Laser emittiert wird, absorbieren können. Eine entsprechende Absorption führt in den erfindungsgemäßen auszuwählenden Additiven zur Freisetzung von gasförmigen Zersetzungsprodukten, beispielsweise infolge der durch den Laser eingebrachten thermischen Energie oder eines durch die elektromagnetische Strahlung induzierten Bindungsbruches. Als besonders vorteilhafte Additive haben sich hierbei anorganische Verbindungen erwiesen, die in ihrer Struktur Kristallwasser aufweisen, welches sie bei thermischer Belastung freisetzen. Die entsprechenden anorganischen Verbindungen mit Kristallwasser, beispielsweise Übergangsmetallkomplexe, sind in zahlreichen unterschiedlichen Färbungen und damit mit zahlreichen unterschiedlichen Absorptionsverhalten verfügbar und können somit an die Bedürfnisse der jeweiligen Anwendung angepasst werden, wobei die Hersteller entsprechender Verbindungen zumeist Informationen über das Absorptions- und Zersetzungsverhalten zur Verfügung stellen. Bevorzugt sind erfindungsgemäße Verfahren, wobei das Additiv ausgewählt ist aus der Gruppe bestehend aus Farbstoffen und Pigmenten, vorzugsweise Pigmenten, bevorzugt ausgewählt aus der Gruppe bestehend aus anorganischen Verbindungen mit Kristallwasser, insbesondere Übergangsmetallkomplexe mit Kristallwasser, organischen Farbstoffen und organischen Pigmenten, insbesondere Ruß, wobei das gasförmige Zersetzungsprodukt vorzugsweise ausgewählt ist aus der Gruppe bestehend aus Wasser, Kohlenstoffdioxid, Kohlenstoffmonoxid und Stickstoffoxiden, bevorzugt ausgewählt ist aus der Gruppe bestehend aus Wasser, Kohlenstoffdioxid. Beispiele für geeignete Additive sind beispielsweise Eisenverbindungen, wie das als Berliner Blau bezeichnete Eisen(III)-hexacyanidoferrat(II/III), oder Kupferverbindungen, insbesondere Kupferhydroxidphosphate und Kupferphosphate, oder wasserhaltige Schichtsilikate der Glimmergruppe.

Bei der Verfahrensführung hat es sich als zielführend erwiesen, die Vorrichtung zur Durchführung des Verfahrens so auszulegen, dass die elektromagnetische Strahlung im Wesentlichen orthogonal auf das mehrschichtige Ausgangsmaterial auftrifft, da dies eine besonders gezielte Strukturierung der unterliegenden Trägerschicht ermöglicht und die Länge des Strahlengangs in der Silikon-Releaseschicht, die die elektromagnetische Strahlung durchlaufen muss, minimiert, sodass auch der Einfluss von etwaigen bestehenden kleinen Wechselwirkungen minimiert wird. Bevorzugt ist ein erfindungsgemäßes Verfahren, wobei das abschnittweise Bestrahlen so erfolgt, dass die elektromagnetische Strahlung in einem Einfallswinkel von 20° oder weniger, bevorzugt 10° oder weniger, besonders bevorzugt 5° oder weniger, ganz besonders bevorzugt im Wesentlichen orthogonal auf das mehrschichtige Ausgangsmaterial auftrifft.

Insbesondere im Vergleich zu herkömmlichen mechanischen Strukturierungsverfahren, beispielsweise unter Verwendung einer Rolle, ist ein großer Vorteil des erfindungsgemäßen Verfahrens darin zu sehen, dass mit diesem nicht stets die gleichen bzw. periodisch wiederkehrende Muster auf der Oberfläche des Trennmaterials strukturiert werden müssen, sondern dass prinzipiell zu jedem Zeitpunkt des Verfahrens das Strukturierungsmuster geändert werden kann, indem lediglich das Bestrahlungsschema des Lasers verändert wird, was regelmäßig durch eine gebräuchliche Steuerungsvorrichtung bzw. eine damit verbundene optische Einrichtung, die den Laserstrahl gemäß den von außen vorgegebenen Steuerungsinformationen über das mehrschichtige Ausgangsmaterial führt, möglich ist. Bevorzugt ist ein erfindungsgemäßes Verfahren, wobei das abschnittweise Bestrahlen durch eine Steuerungsvorrichtung gesteuert wird und das mehrschichtige Ausgangsmaterial bevorzugt in einem vorgegebenen Muster bestrahlt wird, wobei das vorgegebene Muster besonders bevorzugt während des Verfahrens modifiziert wird.

Auch wenn es mit dem erfindungsgemäßen Verfahren grundsätzlich möglich ist, gleichzeitig auf beiden Seiten der Trägerschicht eine laserinduzierte Veränderung herbeizuführen, hat es sich in der Praxis als durchaus sinnvoll erwiesen, wenn das mehrschichtige Ausgangsmaterial während des abschnittsweisen Bestrahlens mit der der Silikon-Releaseschicht entgegengesetzten Seite auf einer festen Unterlage aufliegt. Insbesondere bei dünnen Trägerschichten erweist es sich als vorteilhaft, dass dadurch ein Widerstand gegen die Deformation der Trägerschicht in die von der Silikon-Releaseschicht abgewandte Seite ausgebildet wird, sodass eine Volumenexpansion der Trägerschicht idealerweise vollständig in eine Deformation der Silikon-Releaseschicht überführt werden kann. Bevorzugt ist somit ein erfindungsgemäßes Verfahren, wobei das mehrschichtige Ausgangsmaterial während des abschnittweisen Bestrahlens mit der der Silikon-Releaseschicht entgegengesetzten Seite auf einer Unterlage, vorzugsweise einem Förderband, einer ausreichend dimensionierten Umlenkrolle oder einem Abzug, bevorzugt einer ausreichend dimensionierten Umlenkrolle, aufliegt.

Als großer Vorteil des erfindungsgemäßen Verfahrens hat es sich erwiesen, dass durch die gezielte Steuerung der Laserleistung und der Bestrahlungsdauer jedes Punktes das Ausmaß der Volumenexpansion und damit auch der Deformation der Silikon-Releaseschicht ganz gezielt gesteuert werden können. Hierbei können auch kleine Strukturierungen erzeugt werden, die in vielen Verfahren des Standes der Technik bereits aus Gründen der Feinheit der verwendeten Werkzeuge nicht zu realisieren sind. Entsprechend können mit dem erfindungsgemäßen Verfahren besonders feine Strukturen realisiert werden. Bevorzugt ist folglich ein erfindungsgemäßes Verfahren, wobei das strukturierte Trennmaterial eine mittlere Oberflächenrauigkeit Ra im Bereich von 5 bis 100 µm, bevorzugt im Bereich von 10 bis 50 µm, aufweist.

Die Erfindung betrifft zudem ein Verfahren zur Herstellung von abgedeckten Klebebändern, umfassend das erfindungsgemäße Verfahren zur Herstellung des strukturierten Trennmaterials sowie die Schritte:
c) Beschichten der strukturierten Seite des strukturierten Trennmaterials mit einer eine Klebemasse umfassenden Schmelze oder Lösung zum Herstellen eines mit Klebmasse beschichteten Trennmaterials, und
d) Abkühlen oder Trocknen des beschichteten Trennmaterials zur Herstellung eines abgedeckten Klebebandes.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

Bei dem erfindungsgemäßen Verfahren wird das erfindungsgemäße bzw. erfindungsgemäß hergestellte strukturierte Trennmaterial aus der Schmelze oder aus der Lösung, vorzugsweise aus der Lösung, mit einer Klebemasse beschichtet. In einem nächsten Schritt wird die Klebemasse in Abhängigkeit von der Art der Beschichtung durch Abkühlen der Schmelze oder Entfernung des Lösungsmittels durch Trocknung auf den Strukturen des strukturierten Trennmaterials ausgeformt und nimmt dadurch an der Oberfläche der Klebemasse die Strukturen des strukturierten Trennmaterials an, welches dabei als Negativ der an der Oberfläche der Klebemasse ausgeformten Strukturen fungiert.

Bei der Klebemasse kann es sich grundsätzlich um eine haftklebrige Klebemasse oder eine aushärtbare Klebemasse handeln, die dem Fachmann jeweils bekannt sind. Beispiele für Haftklebemassen sind unter anderem Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, wobei diese Haftklebemassen weitere Zusätze wie beispielsweise Füllstoffe, Alterungsschutzmitteln und Vernetzer enthalten können. Bevorzugt ist insoweit ein erfindungsgemäßes Verfahren, wobei die Klebemasse eine aushärtbare Klebemasse oder eine haftklebrige Klebemasse ist, wobei die Klebemasse vorzugsweise eine haftklebrige Klebemasse ist, wobei die haftklebrige Klebemasse bevorzugt ein Polyacrylat, ein chemisch vernetztes Polyurethan-Polymer, hergestellt durch katalytische Polyaddition von einem oder mehreren Polyisocyanaten mit einem oder mehreren Polyolen, oder einen Synthesekautschuk umfasst, und bevorzugt zudem ein oder mehrere Klebharze umfasst.

Das in dem erfindungsgemäßen Verfahren abzudeckende Klebeband kann zweckmäßigerweise neben der Klebemasse auch einen Träger umfassen, auf dem die Klebemasse angeordnet ist. Bevorzugt ist demnach ein erfindungsgemäßes Verfahren, wobei das Klebeband zusätzlich zur Klebemasse einen Träger umfasst, wobei der Träger ein Material umfasst, dass ausgewählt ist aus der Gruppe bestehend aus Polyethylen, Polypropylen, Polyvinylchlorid, Polyester, Polyethylenterephthalat, Papier, Gewebe und Vliesstoff, bevorzugt ausgewählt ist aus der Gruppe bestehend aus Polyethylen, Polypropylen, Polyvinylchlorid, Polyester, Polyethylenterephthalat, Baumwollgewebe und Vlies-Nähwirkstoff.

Bevorzugt ist ein erfindungsgemäßes Verfahren, wobei der mit Träger vor dem Beschichten zur Verbesserung der Haftung einer physikalischen Vorbehandlung unterzogen wird, beispielsweise durch Flamm-, Plasma- oder Coronabehandlung.

Im Lichte der vorstehenden Ausführungen erkennt der Fachmann, dass die vorliegende Erfindung zudem ein strukturiertes Trennmaterial zur Abdeckung von Klebemassen von Klebebändern betrifft, vorzugsweise herstellbar mit einem erfindungsgemäßen Verfahren, wobei das strukturierte Trennmaterial eine zumindest teilweise aus Kunststoff ausgebildete Trägerschicht und eine auf der Trägerschicht angeordnete Silikon-Releaseschicht umfasst, wobei die Trägerschicht an der Grenzfläche zwischen Trägerschicht und Silikon-Releaseschicht eine Vielzahl von Erhebungen aufweist, sodass auf der von der Trägerschicht abgewandten Oberfläche der Silikon-Releaseschicht eine Vielzahl entsprechender Erhebungen vorliegen, wobei die Trägerschicht zumindest ein Additiv und Einschlüsse eines gasförmigen Zersetzungsproduktes des Additivs umfasst.

Das erfindungsgemäße strukturierte Trennmaterial ist besonders vorteilhaft, weil es über besonders gleichmäßige Haft- bzw. Releaseeigenschaften auf solchen Klebemassen verfügt, auf die es zur Abdeckung und zur Prägung der Klebemassen aufgebracht wird. Dies ist insbesondere dadurch bedingt, dass die indirekte Strukturierung der Oberfläche des strukturierten Trennmaterials nicht zu einer Zerstörung der aufgebrachten Silikon-Releaseschicht führt, sodass das strukturierte Trennmaterial an allen Erhebungen und Vertiefungen ausreichend mit der Silikon-Releaseschicht bedeckt ist und die Silikon-Releaseschicht dabei vorteilhafterweise eine sehr gleichmäßige Dicke aufweist.

Bevorzugt ist ein erfindungsgemäßes strukturiertes Trennmaterial, wobei die Silikon-Releaseschicht an sämtlichen Stellen eine Schichtdicke aufweist, die mehr als 50 %, bevorzugt mehr als 70 %, besonders bevorzugt mehr als 90 % der größten Schichtdicke der Silikon-Releaseschicht entspricht.

Im Rahmen der vorliegenden Erfindung wird zudem die Verwendung eines mit dem erfindungsgemäßen Verfahren hergestellten abgedeckten Klebebandes zum Fügen von Bauteilen offenbart, insbesondere von Bauteilen in der Fahrzeugindustrie. Hierzu wird das strukturierte Trennmaterial vor dem Fügen von der Klebemasse entfernt und die strukturierte Klebemasse des Klebebandes anschließend auf das zu fügende Teil appliziert. Die vorteilhafte Oberflächenstruktur der Klebemasse, die durch das erfindungsgemäße strukturierte Trennmaterial aufgeprägt wurde, erlaubt es hierbei, das Klebeband zu applizieren, ohne dass es zu ungewollten Lufteinschlüssen kommt.

Abschließend betrifft die vorliegende Erfindung auch die Verwendung eines Lasers bei der Herstellung von strukturierten Trennmaterialien mit einer gleichmäßig bedeckenden Silikon-Releaseschicht, zur indirekten Strukturierung der auf einer zumindest teilweise aus Kunststoff ausgebildeten Trägerschicht angeordneten Silikon-Releaseschicht eines mehrschichtigen Ausgangsmaterials durch lokale Volumenexpansion der mit einem absorbierenden Additiv versetzten Trägerschicht, wobei keine materialabtragende Bearbeitung der Silikon-Releaseschicht erfolgt.

Ausgehend vom Stand der Technik war es nicht absehbar, dass die vorstehend definierten Aufgaben mit dieser erfindungsgemäßen Verwendung gelöst werden könnten und insbesondere nicht absehbar, dass eine entsprechende Modifikation ohne den sonst bei laserbasierten verfahren häufig auftretenden Materialabtrag erfolgen könnte.

Nachfolgend wird die Erfindung anhand von Ausführungsbeispielen und schematischen Abbildungen weiter erläutert. Hierfür wird Bezug auf die beiliegenden Figuren genommen. Dabei zeigen:
- Fig. 1: eine schematische Visualisierung des Schrittes b) des erfindungsgemäßen Verfahrens zu einem ersten Zeitpunkt;
- Fig. 2: eine schematische Visualisierung des Schrittes b) des erfindungsgemäßen Verfahrens zu einem zweiten Zeitpunkt;
- Fig. 3: eine schematische Visualisierung des Schrittes b) des erfindungsgemäßen Verfahrens zu einem dritten Zeitpunkt;
- Fig. 4: eine erste exemplarische Mikroskopaufnahme einer mittels des erfindungsgemäßen Verfahrens strukturierten Oberfläche eines strukturierten Trennmaterials.
- Fig. 5: eine zweite exemplarische Mikroskopaufnahme einer mittels des erfindungsgemäßen Verfahrens strukturierten Oberfläche eines strukturierten Trennmaterials.
- Fig. 6: eine dritte exemplarische Mikroskopaufnahme einer mittels des erfindungsgemäßen Verfahrens strukturierten Oberfläche eines strukturierten Trennmaterials.
- Fig. 7: eine vierte exemplarische Mikroskopaufnahme einer mittels des erfindungsgemäßen Verfahrens strukturierten Oberfläche eines strukturierten Trennmaterials.

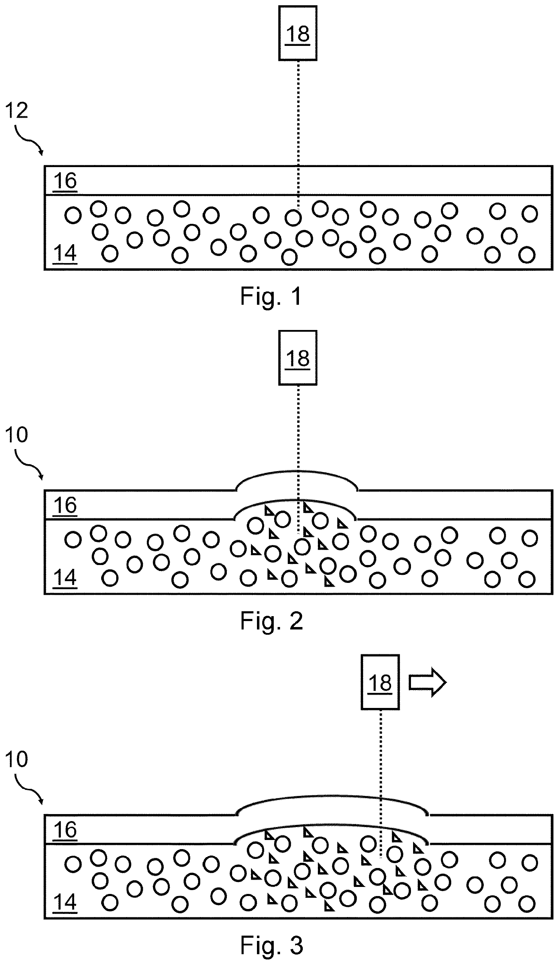

Die Figuren 1 bis 3 zeigen eine schematische, stark vereinfachte Darstellung des Funktionsprinzips des erfindungsgemäßen Verfahrens. In Figur 1 ist zu erkennen, dass ein mehrschichtiges Ausgangsmaterial 12 bereitgestellt wird, welches eine vollständig aus Kunststoff ausgebildete Trägerschicht 14 und eine auf der Trägerschicht 14 angeordnete Silikon-Releaseschicht 16 umfasst.

In den Figuren 1 bis 3 ist das in der Trägerschicht 14 vorhandene Additiv schematisch als Vielzahl von Kreisen angedeutet. Das mehrschichtige Ausgangsmaterial 12 wird abschnittsweise mit einer von einem Laser 18 erzeugten elektromagnetischen Strahlung bestrahlt.

In den Figuren 2 und 3 sind die vom Additiv infolge der Absorption abgespaltenen gasförmigen Zersetzungsprodukte schematisch als Vielzahl von Dreiecken angedeutet. Figur 2 zeigt dabei, wie die Bestrahlung der Trägerschicht 14 zu einer lokalen Volumenexpansion der Trägerschicht 14 durch die freigesetzten gasförmigen Zersetzungsprodukte führt, die indirekt zu einer Verformung der aufliegenden Silikon-Releaseschicht 16 führt und somit in einem strukturierten Trennmaterial 10 resultiert.

In Figur 3 wird der zur Bestrahlung verwendete Laser 18 schematisch relativ zum strukturierten Trennmaterial 10 bewegt, um eine größere Erhebung auf der Oberfläche des strukturierten Trennmaterials 10 zu schaffen, was in der Praxis jedoch wohl zumeist durch ein optisches Ablenken des Laserstrahls erfolgen wird.

In einer beispielhaften Ausführung des erfindungsgemäßen Verfahrens wurde ein strukturiertes Trennmaterial hergestellt.

Hierfür wurde ein mehrschichtiges Ausgangsmaterial bereitgestellt, welches eine vollständig aus HD-Polyethylen ausgebildete Trägerschicht umfasst. Die Trägerschicht wies eine Dicke von 100 µm auf. Mit einem Fünfwalzenauftragswerk wurde eine Silikon-Releaseschicht auf die Trägerschicht aufgebracht, um das mehrschichtige Ausgangsmaterial zu formen.

Hierfür wurde ein lösungsmittelfreies, thermisch additionsvernetzendes Silikonsystem verwenden. Die Beschichtung wurde so durchgeführt, dass eine mittlere Schichtdicke der Silikon-Releaseschicht von 1,2 µm eingestellt wurde. Die Trägerschicht umfasste als Additiv einen Eisenkomplex mit Kristallwasser, welcher elektromagnetische Strahlung mit einer Wellenlänge von 1064 nm absorbieren und infolge der Absorption Wasser als gasförmiges Zersetzungsprodukt abspalten kann.

Das mehrschichtige Ausgangsmaterial wurde mit einer von einem Nd:YAG-Laser (LP-V10 der Firma Panasonic) erzeugten elektromagnetischen Strahlung der Wellenlänge 1064 nm abschnittsweise bestrahlt, um das Trennmaterial zu strukturieren.

Die Silikon-Releaseschicht war für elektromagnetische Strahlung der Wellenlänge 1064 nm im Wesentlichen durchlässig und zeigte entsprechend keine feststellbare Wechselwirkung mit der elektromagnetischen Strahlung.

Das abschnittsweise Bestrahlen erfolgte durch die Silikon-Releaseschicht hindurch. Infolge des Bestrahlens absorbierte das in der Trägerschicht vorhandene Additiv die elektromagnetische Strahlung und spaltete ein gasförmiges Zersetzungsprodukt ab, sodass die Trägerschicht in den bestrahlten Abschnitten eine lokale Volumenexpansion erfuhr und aufschäumte. Durch diese lokale Volumenexpansion wurde die Form der auf der Trägerschicht angeordneten Silikon-Releaseschicht verändert, sodass die von der Trägerschicht abgewandte Oberfläche der Silikon-Releaseschicht in den bestrahlten Abschnitten indirekt strukturiert wurde. Hierbei wurde das Bestrahlen so durchgeführt, dass die elektromagnetische Strahlung im Wesentlichen orthogonal auf das mehrschichtige Ausgangsmaterial auftraf. Das vom Laser abgefahrene Bestrahlungsmuster wurde durch eine Steuerungsvorrichtung vorgegeben.

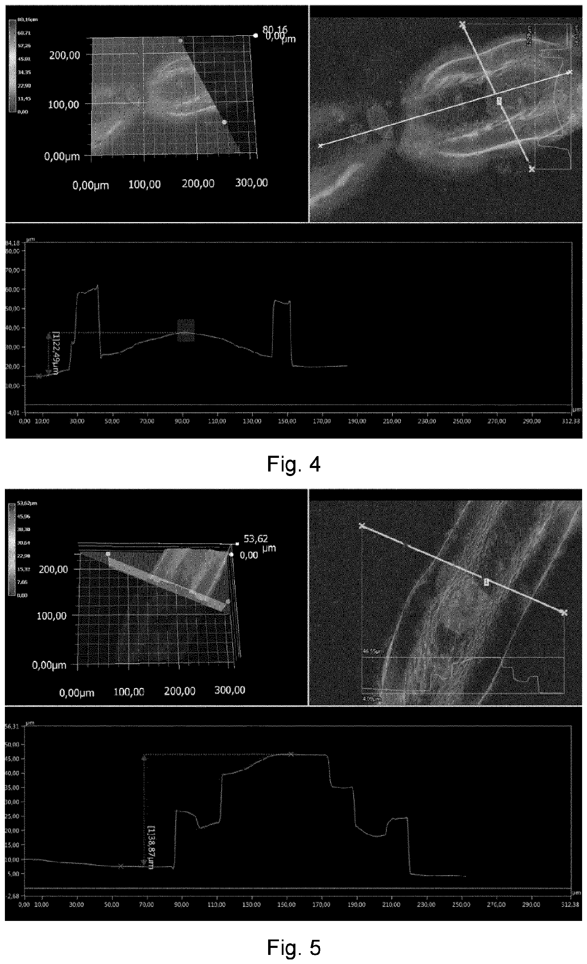

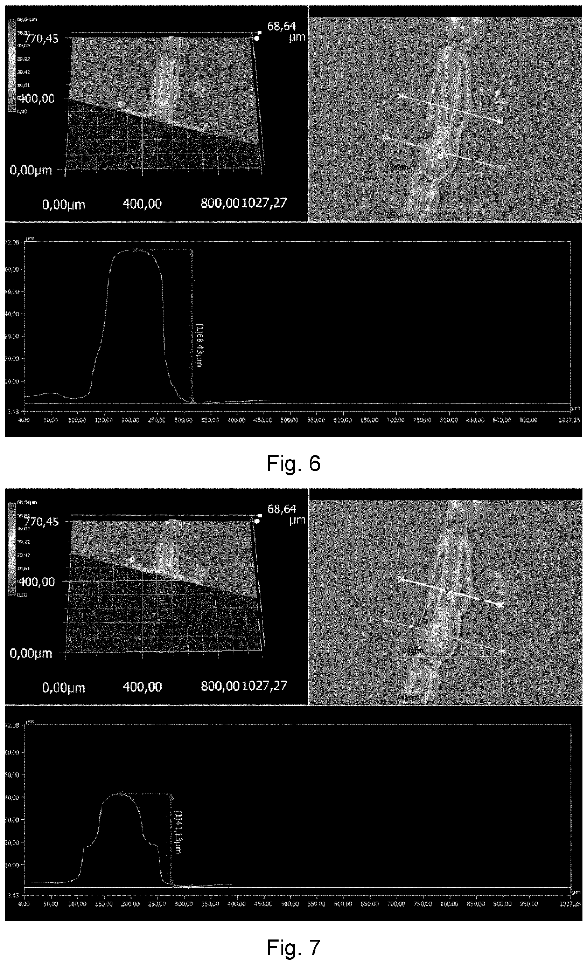

Die Fig. 4 bis 7 zeigen ausgewählte Mikroskopaufnahmen, aufgenommen mit einem Digitalmikroskop VHX-5000 der Firma Keyence, von exemplarischen Strukturen, die auf der Oberfläche des strukturierten Trennmaterials hergestellt wurden, jeweils in der Draufsicht und in einer Schnittansicht mit einer Darstellung der Größendimensionen.

Es wurde festgestellt, dass die Silikon-Releaseschicht an allen Teilen der erzeugten Struktur intakt war.

Das entsprechend strukturierte Trennmaterial kann nunmehr auf die Oberfläche der Klebemasse eines Klebebandes gedrückt werden, um ein abgedecktes Klebeband zu erzeugen, bei dem die Oberfläche der Klebemasse durch die Oberfläche des strukturierten Trennmaterials geprägt wird.

### Bezugszeichen

- 10: Strukturiertes Trennmaterial
- 12: mehrschichtiges Ausgangsmaterial
- 14: Trägerschicht
- 16: Silikon-Releaseschicht
- 18: Laser

## Patentansprüche

1. Verfahren zur Herstellung eines strukturierten Trennmaterials (10), umfassend die Schritte:
a) Herstellen oder Bereitstellen eines mehrschichtigen Ausgangsmaterials (12) umfassend eine zumindest teilweise aus Kunststoff ausgebildete Trägerschicht (14) und eine auf der Trägerschicht (14) angeordnete Silikon-Releaseschicht (16), und
b) Abschnittweises Bestrahlen des mehrschichtigen Ausgangsmaterials (12) mit einer von einem Laser (18) erzeugten elektromagnetischen Strahlung einer Wellenlänge λ zur Herstellung des strukturierten Trennmaterials (10),
wobei die Silikon-Releaseschicht (16) für elektromagnetische Strahlung der Wellenlänge λ im Wesentlichen durchlässig ist,
wobei die Trägerschicht (14) zumindest ein Additiv umfasst, das elektromagnetische Strahlung der Wellenlänge λ absorbieren und infolge der Absorption zumindest ein gasförmiges Zersetzungsprodukt abspalten kann, und
wobei das abschnittweise Bestrahlen so erfolgt, dass die elektromagnetische Strahlung durch die Silikon-Releaseschicht (16) hindurch auf die Trägerschicht (14) auftrifft.

2. Verfahren nach Anspruch 1, wobei das mehrschichtige Ausgangsmaterial (12) zwei Silikon-Releaseschichten (16) umfasst, die auf unterschiedlichen Seiten der Trägerschicht (14) angeordnet sind, wobei das mehrschichtige Ausgangsmaterial (12) vorzugsweise gleichzeitig von beiden Seiten strukturiert wird.

3. Verfahren nach einem der Ansprüche 1 oder 2, wobei die Silikon-Releaseschicht (16) herstellbar ist durch Vernetzung eines vernetzbaren Silikonsystems, wobei das vernetzbaren Silikonsystem ein oder mehrere Polysiloxane umfasst, wobei das vernetzbare Silikonsystem vorzugsweise thermisch härtbar ist, insbesondere kondensations- oder additionsvernetzend härtbar, wobei das vernetzbare Silikonsystem bevorzugt einen Vernetzungskatalysator umfasst.

4. Verfahren nach einem der Ansprüche 1 bis 3, wobei die Trägerschicht (14) ein oder mehrere Polymere umfasst, die ausgewählt sind aus der Gruppe bestehend aus Polyethylenvinylalkohol, Polyethylennaphthalat, Polyethylen, Polypropylen, Cycloolefin-Copolymeren und Polyvinylidenchlorid.

5. Verfahren nach einem der Ansprüche 1 bis 4, wobei das Additiv ausgewählt ist aus der Gruppe bestehend aus Farbstoffen und Pigmenten, vorzugsweise Pigmenten, bevorzugt ausgewählt aus der Gruppe bestehend aus anorganischen Verbindungen mit Kristallwasser, insbesondere Übergangsmetallkomplexe mit Kristallwasser.

6. Verfahren nach einem der Ansprüche 1 bis 5, wobei die Wellenlänge λ der elektromagnetischen Strahlung im Bereich von 400 bis 1200 nm liegt.

7. Verfahren nach einem der Ansprüche 1 bis 6, wobei die elektromagnetische Strahlung mit einem frequenzmodulierten Laser (18) erzeugt wird.

8. Verfahren zur Herstellung von abgedeckten Klebebändern, umfassend das Verfahren zur Herstellung des strukturierten Trennmaterials (10) nach einem der Ansprüche 1 bis 7 sowie die Schritte:
c) Beschichten der strukturierten Seite des strukturierten Trennmaterials (10) mit einer eine Klebemasse umfassenden Schmelze oder Lösung zum Herstellen eines mit Klebmasse beschichteten Trennmaterials, und
d) Abkühlen oder Trocknen des beschichteten Trennmaterials zur Herstellung eines abgedeckten Klebebandes.

9. Strukturiertes Trennmaterial (10) zur Abdeckung von Klebemassen von Klebebändern, wobei das strukturierte Trennmaterial (10) eine zumindest teilweise aus Kunststoff ausgebildete Trägerschicht (14) und eine auf der Trägerschicht (14) angeordneten Silikon-Releaseschicht (16) umfasst, wobei die Trägerschicht (14) an der Grenzfläche zwischen Trägerschicht (14) und Silikon-Releaseschicht (16) eine Vielzahl von Erhebungen aufweist, sodass auf der von der Trägerschicht abgewandten Oberfläche der Silikon-Releaseschicht (16) eine Vielzahl entsprechender Erhebungen vorliegen, wobei die Trägerschicht (14) zumindest ein Additiv und Einschlüsse eines gasförmigen Zersetzungsproduktes des Additivs umfasst.

10. Verwendung eines Lasers (18) bei der Herstellung von strukturierten Trennmaterialien (10) mit einer gleichmäßig bedeckenden Silikon-Releaseschicht (16), zur indirekten Strukturierung der auf einer zumindest teilweise aus Kunststoff ausgebildeten Trägerschicht (14) angeordneten Silikon-Releaseschicht (16) eines mehrschichtigen Ausgangsmaterials (12) durch lokale Volumenexpansion der mit einem absorbierenden Additiv versetzten Trägerschicht (14), wobei keine materialabtragende Bearbeitung der Silikon-Releaseschicht (16) erfolgt.
